# EUROPEAN PATENT APPLICATION

(11) **EP 4 266 647 A1**
(43) Date of publication of application: **25.10.2023**
(21) Application number: 23169302.9
(22) Date of filing: 21.04.2023
(51) Int. Cl.: H04L 49/351, H04L 49/552, H04L 12/44, H04L 45/00, H04L 45/243, H04L 47/2425

(54) **DATA NETWORK FOR SAFETY-CRITICAL APPLICATIONS**

(30) Priority: 22.04.2022 CH 4692022
(71) Applicant: Mercury Mission Systems International S.A., 1212 Lancy (CH)
(72) Inventor: Baumgartner, Sven, 8953 Dietikon (CH); Yanay, Alon, 8006 Zürich (CH); Pichler, Michael, 8102 Oberengstringen (CH); Ruppert, Christian, 1217 Meyrin (CH); Ricco, Philippe, 74100 Annemasse (FR)
(74) Representative: P&TS SA (AG, Ltd.)

(57) **Abstract**

A safe Ethernet interface connectable with multiple physical links, for creating deterministic routerless mesh network. Each node can act as relay to implement redundant paths using existing cabling. The nodes are self-synchronising and use a decentralized algorithm without the need of a master clock. Network using the inventive interface can apply time windows to messages according to their features and guarantee a minimum bandwidth and deterministic latency to critical packets.

## Description

### Technical domain

The present invention concerns a data network for communication between digital systems. In embodiments, the present invention relates to a data network and a network interface providing safety-critical communication between networked subsystems. The data network and interface of the invention has a fully deterministic behaviour and is particularly suitable for avionic applications, but its domain encompasses all situations requiring highly reliable, wide-bandwidth networking.

### Related art

With the rise of the "digital airplanes" there has been a drive to improve the integration of the actuators, sensors and computing subsystem in an aircraft by means of digital networks. While the introduction of data networking in aircrafts has brought a host of advantageous possibilities, there is a concern that conventional network interfaces and protocols do not meet the stringent safety requirements of avionics applications.

The Ethernet network is the reference in the field of wired communication networks. The switched full-duplex implementation described, for example, in open standard IEEE 802.1 and IEEE 802.3, is frequently used in industry and the necessary hardware and software components are widely and easily available. Nevertheless, these commercial solutions cannot provide the reliability and determinism that are required in avionics applications.

Specific data buses and protocols for aircrafts and vehicles have been developed, such as ARINC-429, MIL-1553 or CAN. These solutions, however, do not always provide the high bandwidth required in modern fly-by-wire aircraft, and, when they do, the gain in performance is accompanied by substantial cost increases.

Standard networking equipment does not provide synchronization between nodes or precision timing. They often exhibit unpredictable latency, message delivery is not universally guaranteed, and the order of packets may not be preserved. Time-sensitive applications, on the other hand, requires deterministic networks capable of delivering data reliably in a deterministic time, within a stated uncertainty.

Some providers, for example Airbus with his AFDX^{®} (ARINC standard 664) technology, propose Ethernet-based network that can share the available bandwidth between "virtual links" in a deterministic fashion. This technology is described, among others, in publications EP1309131 and US6925088. These solutions are generally considered complex, difficult to configure, and expensive to deploy and maintain.

AFDX provides safety through doubly redundant cables and switches, and most equipment are limited to a speed of 100 Mbit/s. The configuration of the endpoints and infrastructure nodes is burdensome and heavily influences the configuration and maintenance costs.

ADFX does not provide intrinsic synchronization either. In the context of AFDX, synchronisation is generally achieved out-of-band. PTP and equivalent protocols are not considered safety-certifiable. Ethernet variants for time-sensitive networking are being studied and have been proposed, for example by security workgroups of the IEEE and of the IETF (Internet Engineering Task Force). These efforts have not yet given a solution that could be certified for a safety-critical application in an aircraft.

US 2010195634 and US 6760782 also disclose Ethernet networks especially devised for avionics or high-reliability applications.

EP 3324578 A1, assigned to the applicant, discloses an Ethernet ring-type network for aerospace applications.

The publication Jabbar et.al. " Aerospace Use Cases and Requirements by SAE committee ", published on March 10, 2021 as https://www.ieee802.org/1/files/public/docs2021/dp-Jabbar-et-al-Aerospace-Use-Cases-0321-v06.pdf analyses the safety problems of these attempts.

Bit-index explicit replication (BIER) is a multicast mechanism in IP networks that allows efficient transport of multicast messages without the need for programming explicit routing directives in the intermediate devices. WO 2017118879 A1 discloses a multicast IP network based on this concept and mechanisms to optimise the number of transmission to reach a given set of target nodes, but does not propose a deterministic, safety-certifiable transmission.

Various mechanism of synchronising devices in a data network have been proposed. US 2008 282224 A1 discloses an ethernet implementation of such a mechanism, as well as a transmission protocol in which the transmission time is divided into bands that are assigned to channels with different priority levels.

Wi-Fi networks can be organised in a mesh topology with multiple infrastructure nodes. US 2020068358 A1 discloses a use of such a wireless network for distributing content to passengers in an airliner.

### Short disclosure of the invention

There is a need for a data network that can ensure fault-tolerant, deterministic data transmission between a set of networked devices and at the same time provides a mechanism for synchronising the devices together. This is an aim of the present invention that is attained by the object of the attached claims, and in particular by a time-deterministic data network interface configured for connection with one or more host systems and to a plurality of physical media, such that the interface is connectable to a plurality of neighbouring compatible nodes, the data network interface comprising a programmable configuration table storing addresses of reachable nodes, the data network interface being configured for: receiving a message from a neighbouring node or from the host, selecting a subset of neighbouring nodes based on message characteristics and on the configuration table, transferring concurrently multiple copies of the message to the selected neighbouring nodes.

Dependent claims introduce useful and important features that are not however essential to the invention such as the inclusion in the message characteristics include one or several of: destination address, identity of the physical transceiver that received the message, channel through which the message was received from the host, destination MAC address, protocol type, destination IP address, destination UDP port, source MAC address, source IP address, source port. The addresses in the address table may be statically determined, and the selection of the subset of neighbouring nodes could results from a deterministic function of the destination address.

Preferably, the data network interface can synchronise the internal time reference with an internal time references of compatible neighbouring nodes through the network. This may involve inserting timestamps in the messages between neighbouring nodes.

In an advantageous variant, the messages transmitted to neighbouring nodes are partitioned in classes or sub-networks according to predefined criteria, each class is associated to one succession of time slices not overlapping with successions of time slices of other classes. In a network where the data interface apply this partitioning, each class may have a predetermined guaranteed bandwidth.

The invention also relates to a network based on the interface mentioned above, in particular for an aircraft. The network may have a mesh topology with redundant paths

In the frame of this disclosure, the wordings "time-deterministic" or "deterministic" imply that the messages relayed in a data interface are retransmitted to other nodes or to the host system without losses, and that the time needed for this retransmission is bounded. Messages/packets in a deterministic network are delivered between the originating application and the destination one without losses and the latency is bounded. Additionally, time determinism may imply, where desired, that the order of packets is preserved.

### Short description of the drawings

Exemplar embodiments of the invention are disclosed in the description and illustrated by the drawings in which:
Figure 1 illustrates schematically a network interface with several physical transceivers according to the present invention.
Figure 2 shows a mesh network using the inventive interface. In is intended that the invention is not limited to a special network arrangement. The interface of the invention can be used to realize mesh networks (fully- or partially connected), star networks, and many more.
Figure 3 shows a physical link between two nodes equipped with synchronised network interfaces. The traffic on the physical ethernet link is partitioned in independent logical channels having a guaranteed bandwidth.

Remarkable elements in the figures are identified by reference signs that are repeated in the text. Identical or equivalent elements may be associated with identical reference symbols. When a figure shows many identical or equivalent elements, some reference symbols may have been omitted to avoid overcrowding.

### Examples of embodiments of the present invention

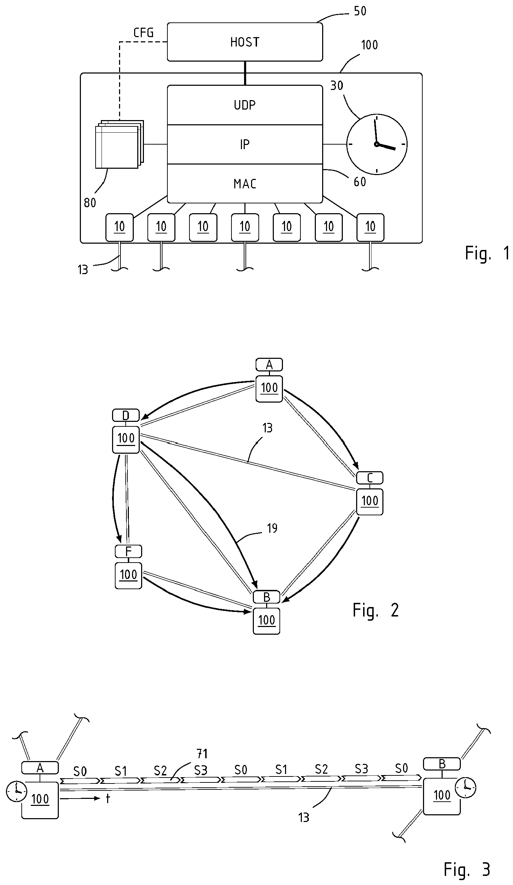

Figure 1 represents a network interface according to one aspect of the present invention. The host system 50 is a networked device that, in most significant cases has a processor unit configured to execute one or more software programs, stored in a memory. The host 50 could be, among others, a computer, a peripheral, or a device providing network services. In an aircraft, the host could be a light management system, a flight display unit or subunit, an air data computer, a navigation unit, a gyroscope, a surface actuator, a radio, a radar unit, a concentrator unit configured to control a plurality of sensors and/or actuators using a serial communication protocol. This list is far from exhaustive.

The host 50 is connected to other subsystem or nodes in a data network by means of a safety-critical network interface 100. Unit 60 is a ethernet processor that is configured to between messages from the host unit and properly formatted ethernet packets.

Even if the figure represents a single host for simplicity, there could be (and will be in many cases) several host systems connected to the same data network interface, such as different VMs/'partitions' running on the same CPU or on different cores of a multi-core CPU, different sensors/actuators connected through serial interfaces and so on.

The ethernet processor may have a layered organization, with hierarchical layers configured to implement a protocol stack with a physical layer, a MAC layer, an IP layer, a UDP layer. This is not a requirement of the invention, however, the invention may be configured to deal with other networking protocols, e.g. ICMP (on the same level as UDP) and ARP (between MAC and IP layers). Data flows across the layers in a deterministic way from the host 50 to the physical transceivers 10 and to the physical media 13. This structure is described in further detail in EP 3324578 A1, which is incorporated by reference.

The UDP layer implements the encapsulation of the messages received from the host system, into valid UDP datagrams, and the extraction of the message from the datagrams received from the hierarchically lower layers. Importantly, these operations are autonomously executed in the network interface and are time-deterministic, in the sense that the passage through the UDP layer, in either direction, does not introduce any unforeseeable delay. The UDP layer may use information stored in the parameter area 80, for example in coding and decoding the UDP ports, in a manner that will be explained in detail later.

The UDP unit may detect errors in the datagram, for example by checking the UDP checksum, if it is present, and, in this case, raise a signal to the host system 50.

The IP layer implements the encapsulation of UDP datagram in valid IP frames, the extraction of UDP datagram from the IP packet in the opposite direction. As for the UDP layer, at least the transit of UDP datagrams through the IP layer is autonomous and deterministic. The IP layer may make use of information stored in the parameter area 80, for example, IP addresses.

The MAC layer is responsible for managing the access to the physical media using the transceivers 10 as interface. It has the capability of detecting and possibly correcting errors in data and reporting them to the host processor 50. The MAC layer is responsible for the encoding of valid MAC frames, encapsulating the UDP/IP packets from the layers above, which in turn contain the original message, and for the decoding in the opposite direction. These processing steps are carried out autonomously and in a time-deterministic fashion, as above. To this end, the MAC layer uses information stored in the configuration area 80, for example the MAC addresses.

In the description of this invention, the layers of the interface stack have been represented and discussed as separate entities, for simplicity's sake. This, however, is not an essential feature of the invention that could also include variant in which some of the above layers are combined, share some hardware element, or are realized fully or in part in software.

Importantly, the network interface comprises a plurality of physical ethernet transceivers 10 connectable to physical ethernet media 13. The latter may be 100 Mbit Ethernet cables, gigabit-Ethernet copper cables, optical fibres or any suitable Ethernet physical media. The network interface is also configured to relay ethernet packets received by one transceiver to another transceiver, as it will be clearer later. The drawing shows seven transceivers 10, of which four are connected to physical cables 13. These figures are not limiting, however.

Each network interface includes a programmable configuration area 80 that stores, among other, an address table that records the level 2 (MAC) and/or level 3 (IP) addresses of all the network's nodes with whom the interface needs to communicate.

Preferably, the address table stores the IP and MAC addresses which are either assigned to the network processor itself or to other devices in the network.

Upon packet reception, the network processor compares these addresses (and further data such as UDP ports, protocol types etc) with data extracted from each received packet to determine how to further process the packet, e. g. pass it to the host or forward it to a different transceiver connected to another node. When multiple hosts are connected to a network interface, the configuration tables determine also to which host each received packet should be sent. Different hosts may have distinct IP/MAC address, but the destination may be resolved based on other criteria as well. Preferably, the network interface carries out this determination of the destination of each received packet autonomously, without assistance from the host system, in a predetermined processing time, such that the whole processing of data from the host system to the network is time-deterministic.

Upon transmission of a packet, the address table data is used (together with other data such as UDP ports, protocol types etc) to format the packet before sending.

The address table in the programmable configuration area 80 can be pre-programmed, set or read by the CPU of the host system, preferably in a protected configuration mode (CFG), filled dynamically, or provided in any other way.

The configuration table 80 may contain tables of addresses of devices on the network, for example IP addresses or MAC addresses. data in the address tables may be statically defined in configuration mode, or discovered by a suitable address resolution protocol, such as ARP. The addresses may be changed dynamically through auto-discovery or following host commands. The configuration area 80 may contain also supplemental addressing information, for example, the UDP port numbers of given remote or local services in the network. The configuration table may also include information that the network interface uses to select a physical transceiver for any given packet, among the several available possibilities.

In a variant of the invention, the network interface receives from the host system the message that must be sent, and a high-level identifier of the designated recipient. The network interface selects IP and/or a MAC addresses from the address configuration table 80 based on the received identifier. The latter can be an index, a pointer, or any information that allows selecting an entry in the address configuration table. The network interface is operatively arranged for building an Ethernet packet encapsulating the intended message, without the assistance of the host system. The address resolution may be implemented by a suitably programmed FPGA, in an ASICS, by a programmed CPU, or by any other suitable logic unit. Appropriate UDP port numbers may also be included in the Ethernet frame in the same way. The interface may also format other flavours of IP packets, for example ICMP packets, or non-IP packets, for example ARP packets.

Conversely, when receiving an Ethernet packet from another node, the network interface may, if so configured, provide to the host the entire packet at a given level, i.e., the Ethernet frame, the IP packet, etc. Importantly, the interface can filter the received packets according to flexible criteria, using the information stored in the configuration table 80.

In a simple case, the network interface can find the entry in the configuration table 80 that corresponds to the MAC and/or IP addresses in the message and provides to the host system the payload of the frame, that is the message that was originally sent; and an information that identifies the sender in the configuration table 80, for example an index. As for the transmission's case, the network interface of the invention can carry out these operations autonomously in a time-deterministic manner, without assistance from the host system.

More complex filtering modes are also possible. Packets are classified according to a configurable subset of parameters like
- Transceiver index
- Destination MAC address
- Protocol type
- Destination IP address
- Destination UDP port
- Source MAC address
- Source IP address
- Source port

Filtering criteria for packet forwarding are basically the same. This allows e.g., to classify all ARP packets into one category and all UDP packets addressed to destination port X of destination IP address Y into another category while forwarding all packets with destination IP Z received interface A to interface B. The general case will be filtering according to protocol type and destination parameters, but source parameters are also important in some cases.

In the network interface, a decision is taken whether to route the data to other neighbouring nodes or to the above layers, based for example on address matching using the configuration data in the table 80 or any other suitable criterion. Importantly, the network interface is configured to transfer concurrently multiple copies of the message to more than one neighbouring nodes in predetermined cases.

Figure 2 shows a mesh network built using the inventive network interfaces. The network is drawn with five nodes A, B, C, D, F and seven physical links 13 represented by double straight lines. Each of the network interfaces 100 is configured, for example by filling appropriately the configuration tables 80, to forward ethernet packets to one, two or more neighbouring nodes. The network interfaces can thus be configured to define logical routes 19 between nodes that may depend on the packet's destination addresses, represented by the curved arrows. The inventive interface support routerless networks, meaning that all the nodes are equipped to filter the received packets and switch them toward other neighbouring nodes or receive them locally, according to their configuration. The device allows packet forwarding either on MAC level (Switching) or on IP level (routing). This allows for pure switched and/or routed mesh networks or hybrid topologies, e.g. with 'router' type gateways between 'switched' segments.

Fail-safety is an important requirement of aircraft networking, and the network of the invention can be made redundant without a full duplication of all the resources. figure shows, by way of example, that a message generated by node A and destined to node B is delivered concurrently through three distinct paths: A-C-B, A-D-B and A-D-F-B. Many more configurations are possible. In this way the delivery of packets from A to B is guaranteed even in case of a single failure.

Preferably, the logical routes 19 can be defined in such a manner to avoid all closed loop, such that all packets necessarily end after a finite number of retransmission. This can be achieved by programming suitably the configuration tables 80 of the nodes, for example. In alternative, or as an additional safety against failures and misconfigurations, a logic is added to ensure that Ethernet packets have a finite lifetime and do not flood the network by circulating indefinitely. In a possible implementation the packets include a counter that is created with an initial value, decremented at each passage through one of the network interfaces, and the packet is not retransmitted when the counter reaches zero.

As shown in figure 1, the network interfaces of the invention may include a time reference 30. Preferably, the network interfaces 100 are configured to synchronise their time references with those of neighbouring nodes, by exchanging data over the network. The synchronisation process follows a masterless protocol in which all the nodes in the network are equally privileged, and data containing synchronization information is exchanged only between neighbouring nodes. Provided the amount of synchronization data exchanged between the nodes is sufficient in frequency and amount, all the time references of all the nodes converge towards a common time, with an error that can be estimated.

Synchronization data can take several forms, all comprised in the invention. In a possible implementation, the sender node may insert in an ethernet packet a timestamp generated by its own time reference and the receiver node synchronises its own time reference based on the timestamp in the ethernet packet. The synchronization may use special synchronization packets that are sent autonomously by a network interface and intercepted by the receiving one without involving at all an action of the respective host systems, or else the timestamps may be injected in the general traffic, for example in UDP packets.

The performance of the synchronisation may be improved by additional information in the synchronisation packets such as, for example timestamps at which previous packets were sent and received, information about the current clock rate, the speed at which clock rates are currently being adjusted, information useful to estimate the global network clock error (e.g. about clocks of nodes connected to other physical transceivers) etc.

The clock rates of the reference clocks in each node are adjustable. If (according to information extracted from the synchronization packets) a node's local clock lags behind its neighbours, its clock rate is accelerated; if it is ahead of its neighbours, the clock rate is slowed down.

This algorithm can lead to 'common drifting', where all clocks commonly converge to clocks running at very high or very low frequencies. A mechanism may be implemented to prevent this effect, for example by adding a slight tendency to drift towards a local 'nominal' clock frequency in the control loops.

In exceptional cases (e.g. at initialisation), the current time value is initialised to that of neighbouring clocks (or an average of neighbouring clocks).

In some applications it is necessary to link the time references of the network interfaces with a precise clock, for example a high-quality oscillator or a GPS-disciplined clock. This can be achieved through a higher-level synchronization protocol, such as PTP. Should the high-level synchronization fail, the masterless protocol ensures that the individual time references are kept in sync and beat a common time, albeit with a lower precision.

This coexistence of a central reference clock and the decentralized synchronisation protocol can be achieved in various ways, for example:
- All the clocks are preferably synchronised to a central time server, for example through the PTP protocol. When the central reference fails, nodes fall back to the decentralized protocol and remain synchronous (same precision) with each other, albeit they are no longer linked to an absolute time reference.
- The central time reference may be a 'stubborn' node in the distributed network, i.e. a node that never adjusts its clock to its neighbours so that eventually all clocks run at the speed of the 'stubborn' reference.
- The decentralized protocol is used all the time and the reference clocks inside the nodes are synchronous to each other but never to the central reference. A special time server provides absolute time offset and clock speed difference information between the central reference clock and the synchronized clock reference of all nodes. Each node can calculate the 'central reference time' whenever necessary, based on its local reference and this offset information.

An important advantage of the synchronization, albeit not the only one, is that it allows a division of the available bandwidth into nonoverlapping time slices. In this manner, the bandwidth of the network, or segments thereof, can be divided into an arbitrary number of sub-networks, each associated to a determined succession of time slices. The messages exchanged on the network are subdivided in classes according to any suitable criterion, and each message is transmitted only during the time slices of the sub-network attached to its class. In this manner, each sub-network has a guaranteed bandwidth proportional to the duration of the associated time slices. The partition of the message into classes can be made according to their destination address, or any other suitable criterion. Preferably, the partition is carried out by the network interface 100 using the configuration data stored in the tables 80, without the intervention of the host, and in a time-deterministic manner.

Figure 3 illustrates the time-division of the bandwidth between two nodes. Both nodes A and B have a time reference, and their time references are essentially synchronous, thanks to the process described above. Nodes A and B are part of a larger network with more nodes, but only nodes A and B are represented. The messages circulating on the network are subdivided into four classes, S0-S3, and each of the classes can use only the time slices 71 marked accordingly. This guarantees that messages belonging to different classes will never compete for the physical link 13.

In a preferred implementation, all the nodes of the network are synchronous, and each sub-network having a guaranteed bandwidth proportional to the duration of the associated time slices.

Thanks to the time synchronization, 'equivalent' time slices on different physical links are synchronized, giving the network/system designer the possibility to make them simultaneous or configure them with a predefined time offset with respect to each other. 'Equivalent' time slices on different physical links might or might not have the same duration, e.g. if only a certain proportion of the packets inside the time slice are forwarded to another transceiver a shorter time slice might be allocated to the output than to the input.

The time synchronisation mechanism presented above may be used also to synchronise the hosts to a common clock in order to execute simultaneous tasks or timestamp events according to a common time reference.

### Reference symbols in the figures

- 10: physical transceivers
- 13: physical Ethernet medium, cable
- 19: logical route
- 30: time reference
- 50: host system
- 60: protocol stack, Ethernet processor
- 71: time slice
- 80: configuration table
- 100: network interface

## Claims

1. Time-deterministic data network interface (100) configured for connection with one or more host systems (50) and to a plurality of physical media (13), such that the interface is connectable to a plurality of neighbouring compatible nodes, the data network interface (100) comprising a programmable configuration table (80) storing addresses of reachable nodes, the data network interface being configured for: receiving a message from a neighbouring node or from the host, selecting a subset of neighbouring nodes based on message characteristics and on the configuration table, transferring concurrently multiple copies of the message to the selected neighbouring nodes.

2. The time-deterministic data network interface of any one of the preceding claims, wherein the message characteristics include one or several of: destination address, identity of the physical transceiver that received the message, channel through which the message was received from the host, destination MAC address, protocol type, destination IP address, destination UDP port, source MAC address, source IP address, source port.

3. The time-deterministic data network interface of the preceding claim, wherein the addresses in the address table are statically determined, and the selection of the subset of neighbouring nodes results from a deterministic function of the destination address.

4. The time-deterministic data network interface of any one of the preceding claims comprising an internal time reference (30), the data network interface being configured to synchronise the internal time reference with an internal time references of compatible neighbouring nodes through the network.

5. The time-deterministic data network interface of the preceding claim, configured to insert a timestamp provided by the time reference in messages transmitted to neighbouring nodes and to synchronise the internal time reference based on timestamps in messages received from neighbouring nodes.

6. The time-deterministic data network interface of the preceding claim, configured to partition the messages transmitted to neighbouring nodes in classes or sub-networks (S0,S1,S2,S3) according to predefined criteria, wherein each class is associated to one succession of time slices not overlapping with successions of time slices of other classes, and wherein the messages are transmitted to neighbouring nodes only when the time provided by the internal time reference (30) is in a time slice of the associated succession of time slices.

7. The time-deterministic data network interface of any one of the preceding claims, wherein the messages are Ethernet packets, and the destination address is an IP address or a MAC address.

8. The time-deterministic data network interface of any one of the preceding claims, configured to transmit the received message to the host when the destination address matches an address of the data network interface.

9. A deterministic data network for an aircraft, comprising a plurality of data nodes arranged in a mesh topology, each node being connected to one or more neighbouring nodes through a data network interface according to any one of the preceding claims.

10. The deterministic data network of the preceding claim, having at least one transmit node and one receiving node connected by redundant paths.

11. The deterministic data network of the preceding claim, each node being connected to one or more neighbouring nodes through a data network interface according to claim 5, whereby the time slices are configured such that each class has a predetermined guaranteed bandwidth.
